# EUROPEAN PATENT APPLICATION

(11) **EP 4 325 339 A1**
(43) Date of publication of application: **21.02.2024**
(21) Application number: 22851973.2
(22) Date of filing: 26.07.2022
(51) Int. Cl.: G06F 3/0481

(54) **INFORMATION DISPLAY METHOD AND APPARATUS, ELECTRONIC DEVICE, AND STORAGE MEDIUM**

(30) Priority: 04.08.2021 CN 202110893329
(71) Applicant: Beijing Zitiao Network Technology Co., Ltd., Beijing 100190 (CN)
(72) Inventor: CHE, Wanli, Beijing 100086 (CN)
(74) Representative: Dentons UK and Middle East LLP
(86) International application number: PCT/CN2022/107968
(87) International publication number: WO 2023/011259

(57) **Abstract**

Embodiments of the present disclosure disclose an information display method and apparatus, an electronic device, and a storage medium. The method comprises: checking whether a current page is a draft box page; and in response to the current page being the draft box page, displaying a first capturing control on the draft box page, to enter a capturing page based on the first capturing control; where a video draft is displayed on the draft box page. According to the information display method provided in the present disclosure, a purpose of displaying the capturing control on the draft box page is achieved, so that a user can directly enter the capturing page based on the draft box page, facilitating the user to create work conveniently and rapidly, and an operation path for the user to enter the capturing page from the draft box page can be shortened.

## Description

### CROSS REFERENCE TO RELATED APPLICATION

The present application claims the priority to Chinese Patent Application No. 202110893329.5, filed on August 4, 2021, and entitled "INFORMATION DISPLAY METHOD AND APPARATUS, ELECTRONIC DEVICE, AND STORAGE MEDIUM", which is incorporated in its entirety herein by reference.

### FIELD

The present disclosure relates to the technical field of information, and in particular to an information display method and apparatus, an electronic device, and a storage medium.

### BACKGROUND

With rapid development of the terminal technology and network technology, current video applications are typically applicable to posting work. A user has the chance to create and post an attractive video or post a video shot randomly for keeping a record of the daily life through the video application.

Before posting a video, a user will always save a plurality of video drafts and then posts a more desirable one. However, if none of the effects of the plurality of video drafts is satisfactory to the user, the user needs to exit a draft box page and switch to another page displaying a capturing entry, through which a new video draft is to be shot.

Obviously, such technology prohibits a user from creating new work rapidly.

### SUMMARY

In order to solve or at least partially solve the above technical problems, embodiments of the present disclosure disclose an information display method and apparatus, an electronic device, and a storage medium, a purpose of displaying the capturing control on the draft box page is implemented, so that a user can directly enter the capturing page based on the draft box page, and a purpose of shortening a capturing path for the user is achieved, facilitating the user to create work conveniently and rapidly.

In a first aspect, embodiments of the present disclosure provide an information display method. The method comprises:
checking whether a current page is a draft box page; and
in response to the current page being the draft box page, displaying a first capturing control on the draft box page, to enter a capturing page based on the first capturing control;
where a video draft is displayed on the draft box page.

In a second aspect, embodiments of the present disclosure further provide an information display apparatus. The apparatus comprises:
a checking module, configured to check whether a current page is a draft box page; and
a first displaying module, configured to in response to the current page being the draft box page, display a first capturing control on the draft box page, to enter a capturing page based on the first capturing control;
where a video draft is displayed on the draft box page.

In a third aspect, embodiments of the present disclosure further provide an electronic device. The electronic device comprises:
one or more processors; and
a storage configured to store one or more programs;
the one or more programs, when executed by the one or more processors, cause the one or more processors to implement the information display method described above.

In a fourth aspect, embodiments of the present disclosure further provide a computer-readable storage medium, storing a computer program thereon, where the computer program, when executed by a processor, implements the information display method described above.

The technical solution provided by the embodiments of the present disclosure, when compared with prior art, at least has the following advantages:

In the information display method provided by the embodiments of the present disclosure, upon a detection that the current page is the draft box page, the first capturing control is displayed on the draft box page, to enter the capturing page based on the first capturing control. Accordingly, a purpose of entering the capturing page directly from the draft box page through the first capturing control is achieved, a capturing path is shortened, facilitating a capturing efficiency of a user and the user experience.

### BRIEF DESCRIPTION OF THE DRAWINGS

The above and other features, advantages, and aspects of various embodiments of the present disclosure will become more apparent with reference to the accompanying drawings and the following detailed description. The same or similar reference numerals denote the same or similar elements throughout the accompanying drawings. It should be understood that the accompanying drawings are schematic, and components and elements are not necessarily drawn to scale.
Fig. 1 is a flowchart of an information display method in embodiments of the present disclosure;
Fig. 2 is a schematic diagram of a draft box page in embodiments of the present disclosure;
Fig. 3 is a schematic diagram of a draft box page in embodiments of the present disclosure;
Fig. 4 is a flowchart of an information display method in embodiments of the present disclosure;
Fig. 5 is a schematic diagram of a draft box page in embodiments of the present disclosure;
Fig. 6 is a schematic structural diagram of an information display apparatus in embodiments of the present disclosure; and
Fig. 7 is a schematic structural diagram of an electronic device in embodiments of the present disclosure.

### DETAILED DESCRIPTION

Embodiments of the present disclosure will be further described in detail below in conjunction with the accompanying drawings. Although certain embodiments of the present disclosure are shown in the accompanying drawings, it should be understood that the present disclosure can be implemented in various forms and should not be interpreted as being limited to the embodiments set forth herein. On the contrary, these embodiments are provided for a more thorough and complete understanding of the present disclosure. It should be understood that the accompanying drawings and the embodiments of the present disclosure are merely illustrative, and are not intended to limit the scope of protection of the present disclosure.

It should be understood that various steps described in method embodiments of the present disclosure can be executed in different orders and in parallel. In addition, the method embodiments can include additional steps and/or will not execute the shown steps. The scope of the present disclosure is not limited in this respect.

As used herein, the term "comprise", "include" and their variants indicate openended inclusion, i.e. "comprise, but is not limited to" and "include, but is not limited to". The term "based on" means "at least partially based on". The term "an example" means "at least one example". The term "another example" means "at least one further example". The term "some examples" means "at least some examples". The definitions relevant to other terms are set forth in the description below.

It should be noted that the concepts such as "first" and "second" mentioned in the present disclosure are merely used to distinguish between different apparatuses, modules, or units instead of defining the order or interdependence relation of functions executed by these apparatuses, modules, or units.

It should be noted that the modifiers "alan", and "a plurality of' mentioned in the present disclosure are schematic rather than restrictive. Those skilled in the art should understand that these modifiers should be interpreted as "one or more" unless clearly indicated otherwise in the context.

The names of messages or information interacting between a plurality of apparatuses in the embodiments of the present disclosure are merely for description, and are not intended to limit the scopes of these messages or information.

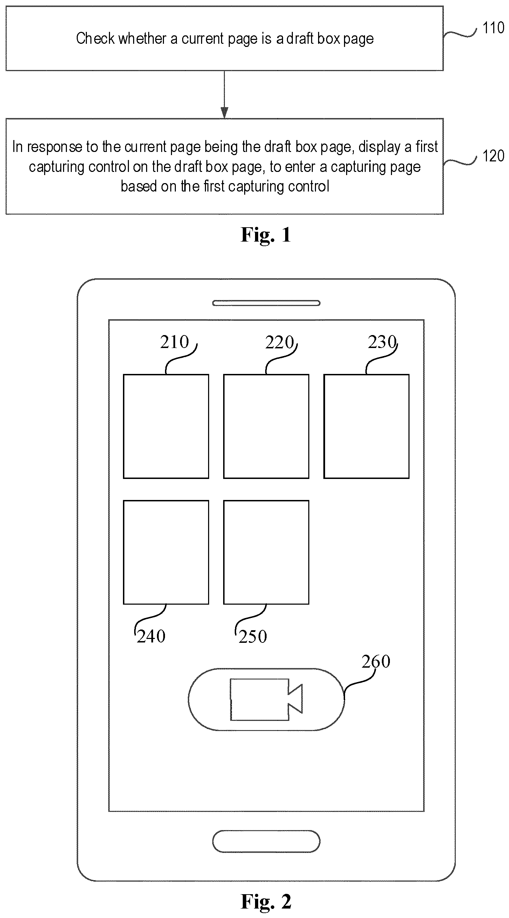

Fig. 1 is a flowchart of an information display method in embodiments of the present disclosure. The method may be executed by an information display apparatus. The apparatus may be implemented through software and/or hardware, and configured in an electronic device (such as a displaying terminal), specifically including, but not limited to, an electric device having a display screen such as a smart phone, a palm computer, a tablet computer, a portable wearable device, or a smart home device (for example, a desk lamp).

As shown in Fig. 1, the method may specifically include:
Step 110: whether a current page is a draft box page is checked.

The current page refers to a page displayed on a display terminal screen. The draft box page refers to a page displaying a video draft. The video draft refers to a video that a user stores through a video application and has not been posted as work yet. The video draft is visible only to the user instead of being pushed to display terminals of other users. A video that has been posted as work may be pushed by a server to the display terminals of other users, so as to be viewed by other users.

In addition, the information display method further includes: in response to a posting instruction for a video draft, video work is generated based on the video draft and is posted.

Step 120: if the current page is the draft box page, then a first capturing control is displayed on the draft box page, to enter a capturing page based on the first capturing control; where the video draft is displayed on the draft box page.

With reference to a schematic diagram of a draft box page in Fig. 2, five video drafts, that are, a first video draft 210, a second video draft 220, a third video draft 230, a fourth video draft 240, and a fifth video draft 250, are displayed on the draft box page. In order to enable the user to directly enter the capturing page from the draft box page or directly trigger a capturing apparatus (for example, a camera) on the draft box page conveniently, a first capturing control 260 is also displayed on the draft box page shown in Fig. 2. If triggering the first capturing control 260, the user can enter the capturing page. In this way, there is no need for the user to exit the draft box page first, then switch to another page displaying the capturing control, and then enter the capturing page from another page displaying the capturing control. Accordingly, an operation path for the user to enter the capturing page from the draft box page can be shortened, a capturing efficiency of the user can be improved, and the user can create work conveniently and rapidly. Especially when none of the video drafts on the draft box page is satisfactory to the user, and the user has a strong demand for capturing, by displaying the first capturing control on the draft box page, the capturing demand of the user can be greatly satisfied, and the user experience can be improved.

Specifically, the information display method further includes: in response to a triggering operation operated on the first capturing control, the draft box page is switched to the capturing page. The user can capture a new video or select an existing video from a photo album on the capturing page.

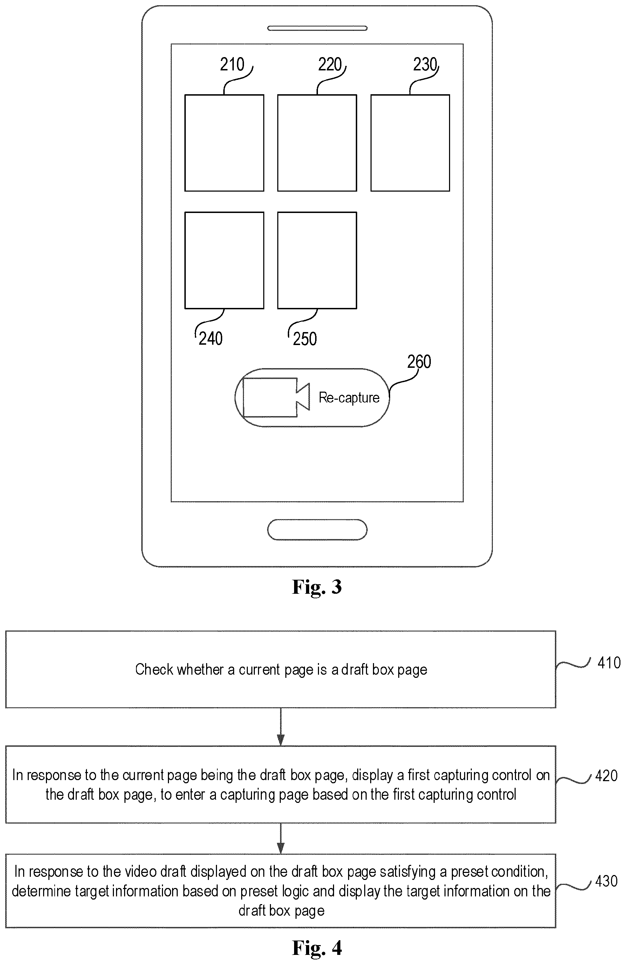

Furthermore, in order to reduce the costs for comprehension and usage threshold, ensure that users can effortlessly acquire information that is used to enter into the capturing page through the first capturing control, and achieve a purpose of guiding the user to create actively, alternatively, the information display method further includes: set prompt information is displayed at a position associated with the first capturing control. The set prompt information is text information, for example, "re-capture" or "post". Fig. 3 is a schematic diagram of another draft box page. As shown in Fig. 3, prompt information "re-capture" is displayed at a position associated with the first capturing control 260.

In the information display method provided by the embodiments of the present disclosure, upon a detection that the current page is the draft box page, the first capturing control is displayed on the draft box page, to enter the capturing page based on the first capturing control. Accordingly, a purpose of entering the capturing page directly from the draft box page through the first capturing control is achieved, a capturing path is shortened, facilitating a capturing efficiency of a user and the user experience.

On the basis of the above embodiments, Fig. 4 is a flowchart of an information display method in an embodiment. In the embodiment, the content displayed on the draft box page is further expanded. Therefore, the user can be guided to create work conveniently and rapidly, and the use experience can be improved.

As shown in Fig. 4, the information display method includes:
Step 410: whether a current page is a draft box page is checked.
Step 420: if the current page is the draft box page, then a first capturing control is displayed on the draft box page, to enter a capturing page based on the first capturing control.
Step 430: if a video draft displayed on the draft box page satisfies a preset condition, then target information is determined based on preset logic and displayed on the draft box page.

The preset condition may be that a total number of video drafts is less than a threshold. With such setting, if the total number of the video drafts is small, the user will have a stronger demand for re-capturing. In this case, the target information is further displayed on the draft box page, and a purpose of guiding the user to actively create work can be achieved.

In an embodiment, the target information may be a music material or a prop material, or a music material and a prop material. The music material refers to a selectable music provided by a video application. During capturing, the user may select a certain specific music from the music materials provided by the video application as a background music. The prop material refers to a selectable prop provided by video music, such as a preset scenery, hat, or glasses. During video capturing, the user may select a certain specific prop from the prop materials to enhance an effect of a shot video. For example, when the user selects certain glasses as the prop, the glass prop is automatically worn on an image of the user during capturing.

Further, the music material displayed on the draft box page may be a music material applied by the video draft in a draft box, a music material collected by the user, a music material whose recommendation degree determined through a personalized recommendation algorithm reaches a threshold, or a popular music material, where the popular music material may refer to a music material applied most frequently by a vast number of users within a preset time period. Similarly, the prop material displayed on the draft box page may be a prop material applied by the video draft in the draft box, a prop material collected by a user, a prop material whose recommendation degree determined through the personalized recommendation algorithm reaches a threshold, or a popular prop material, where the popular prop material may refer to a prop material applied most frequently by a vast number of users within a preset time period.

Alternatively, various music materials may be displayed on the draft box page in a certain order. For example, if the music materials are ranked according to the numbers of number of times applied by to the video draft in the draft box, music materials applied to the video draft more frequently may be ranked at more forward or upper positions, because such music materials are deemed as music materials that are more likely to be used by the user; and music materials applied to the video draft less frequently are ranked at more rearward or lower positions, because such music materials are deemed as music materials that are less likely to be used by the user. Similarly, if the music materials are ranked in an order of time of collection by the user, music materials collected by the user recently may be ranked at more forward or upper positions, because such music materials are more in line with current interests of the user; and music materials collected by the user earlier are ranked at more rearward or lower positions, because such music materials are more in line with previous interests of the user, may have some gaps with the current interests of the user, and thus are ranked at more rearward or lower positions for display. If obtained through the recommendation algorithm, the music materials are ranked according to the recommendation degrees. Music materials with higher recommendation degrees are ranked at more forward or upper positions for display. Ranking and displaying logic of the prop material is similar with that of the music material, which will not be repeated. If music materials and the prop materials are displayed simultaneously, they may be ranked and displayed according to the numbers of times that applied by the video draft, the time of collection by the user, or the recommendation degrees, regardless of whether objects applied by the video draft, objects collected by the user, or objects for which the recommendation degrees are directed are the music materials or the prop materials.

Illustratively, the step that target information is determined based on preset logic and displayed on the draft box page include: the music materials and/or the prop materials applied by the video draft are determined and ranked and displayed in accordance with the numbers of times applied by the video draft, for example, the music materials and/or the prop materials are ranked in accordance with the numbers of times from greatest to smallest for display; alternatively, the music materials and/or the prop materials collected by the user are determined and ranked and displayed in accordance with the time of collection by the user, for example, the music materials and/or the prop materials are ranked according to the time from farthest to closest for display; or alternatively, the music materials and/or the prop materials whose recommendation degrees reach a threshold are determined based on the personalized recommendation algorithm and ranked and displayed in accordance with the recommendation degrees, for example, the music materials and/or the prop materials are ranked according to the recommendation degrees from highest to lowest for display. The target information includes the music materials and/or the prop material. For a certain music material, the number of times applied by the video draft may be calculated as follows: assuming that music material a is applied by two video drafts, then the number of times of music material a applied by the video draft is determined as 2. The step that the music materials are ranked according to the time of collection by the user from farthest to closest may be understood as follows: for example, when the user collected music material a the day before yesterday, music material b yesterday, and music material c today, then the music materials are ranked as music material a-music material b-music material c according to the time of collection by the user from farthest to closest.

The step that the music materials and/or the prop materials whose the recommendation degrees reach a threshold are determined based on the personalized recommendation algorithm includes: a recommendation degree of any one of the music materials and/or prop materials is determined according to reference dimensions and a corresponding weight for each reference dimension; and the music materials and/or the prop materials whose the recommendation degrees reach the threshold are determined. The reference dimensions may include one or more of the following: whether the user has collected it within a set time period (which may be further refined to a time of collection), whether the user has used it within a set time period (which may be further refined to a use time), whether the video draft in the draft box has been used, the number of times it has been used, whether the user has browsed it, the number of times it is browsed, the popularity of the music material and/or the prop material, themes expressed by the music material and/or the prop material, and a portrait feature of the user, etc. The recommendation degree may be determined in combination with the weight corresponding to each reference dimension. For example, a weight corresponding to the music material collected by the user is greater than a weight corresponding to a music material browsed by the user, and a weight corresponding to a music material used by the user is greater than the weight corresponding to the music material collected by the user.

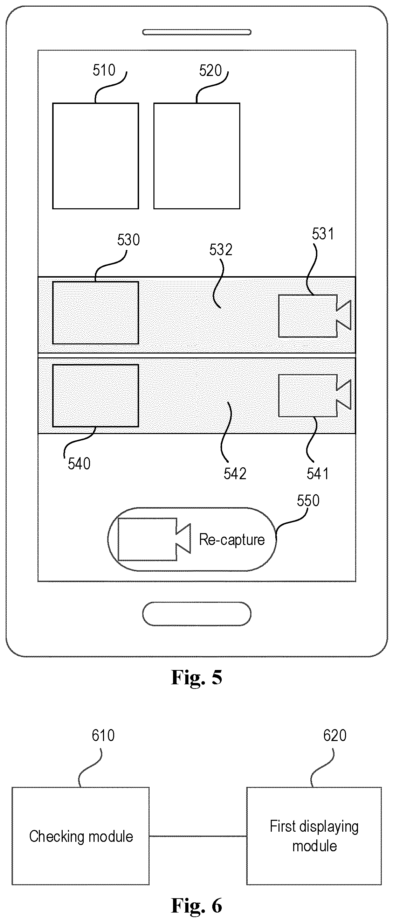

On the basis of the above example, the information display method further includes: displaying second capturing controls at first associated positions of respective music materials and/or prop materials; and in response to a triggering operation operated on any one of the second capturing controls, displaying the capturing page applying a music material and/or a prop material associated with the any one of second capturing controls. Correspondingly, with reference to a schematic diagram of a draft box page in Fig. 5, a first draft video 510, a second draft video 520, a music material 530, a prop material 540, a second capturing control 531 displayed at a first associated position of the music material 530, a second capturing control 541 displayed at a first associated position of the prop material 540, and a first capturing control 550 are displayed on the draft box page. When the second capturing control 531 is triggered by the user, a capturing page to which the music material 530 is automatically applied is entered, specifically, the music material 530 may be automatically played on the capturing page. When the second capturing control 541 is triggered by the user, a capturing page to which the prop material 540 is automatically applied is entered. By displaying the capturing control at the associated position of each specific music material or prop material, the user can enter the capturing page to which an associated music material or prop material is automatically applied by triggering the capturing control. Accordingly, the capturing path for the user can be shortened, and the user can be guided for capturing. Moreover, a creation efficiency of the user can be improved, the user can rapidly enter a capturing page to which a preferred music material or prop material is applied, and the user can create work conveniently and rapidly.

In an embodiment, the information display method further includes: the first capturing control, the target information, and the second capturing control are hid in response to a preset operation operated on the draft box page. The preset operation may be an operation of editing the video draft in the draft box.

In an embodiment, the information display method further includes: a music detail page corresponding to any one of the music materials or a prop detail page corresponding to any one of the prop materials is displayed in response to a triggering operation operated on a second associated position of any one of the music materials or any one of the prop materials. The second associated position may be, for example, position 532 or 542 shown in Fig. 5. If the user triggers the associated position 532, a music detail page of the music material 530 is displayed, and if the user triggers the associated position 542, a prop detail page of the prop material 540 is displayed, so that the user can view the detail page conveniently, and the user experience can be improved.

It can be understood that when the music material or the prop material is displayed, relevant data are required to be loaded. A certain period of time has to be occupied for loading. When loading has not been completed yet, before the target information is displayed on the draft box page, a preset placeholder is displayed on the draft box page until the target information is loaded completely, so as to make the user know that some content are still to be displayed.

It should be noted that the numbers of the music materials and/or the prop materials displayed on the draft box page may be controlled within a preset range. The music materials and/or the prop material displayed on the draft box page do not include a material that has been removed.

Further, recommendation reasons may be further displayed at the associated positions of the music materials and/or the prop materials, for example, "the music and/or the prop have/has been used ** times recently".

According to the technical solution in the present embodiment, when there are a few video drafts in the draft box, recommended music materials and/or prop materials are displayed on the draft box page, and a capturing page to which a certain music material and/or a certain prop material are/is automatically applied may be entered through a second capturing control displayed in association with a specific music material and/or a specific prop material. Accordingly, the capturing path based on the draft box page for the user can be shortened, the user can be endowed with creation inspiration, and the user can create work conveniently and rapidly.

Fig. 6 is a schematic structural diagram of an information display apparatus in embodiments of the present disclosure. As shown in Fig. 6, the information display apparatus specifically includes: a checking module 610 and a first displaying module 620.

The checking module 610 is configured to check whether a current page is a draft box page. The first displaying module 620 is configured to in response to the current page being the draft box page, display a first capturing control on the draft box page, to enter a capturing page based on the first capturing control; where a video draft is displayed on the draft box page.

Alternatively, the information display apparatus further includes: a switching module configured to in response to a triggering operation operated on the first capturing control, switch from the draft box page to the capturing page.

Alternatively, the information display apparatus further includes: a second displaying module configured to display set prompt information at a position associated with the first capturing control.

Alternatively, the information display apparatus further includes: a third displaying module configured to in response to the video draft displayed on the draft box page satisfying a preset condition, determine target information based on preset logic and display the target information on the draft box page.

Alternatively, the third displaying module is specifically configured to: determine music materials and/or prop materials applied by the video draft, and rank and display the music materials and/or the prop materials in accordance with a number of times applied by the video draft; or determine music materials and/or prop materials collected by a user, and rank and display the music materials and/or the prop materials in accordance with time of collection by the user; or determine music materials and/or prop materials whose recommendation degrees reach a threshold based on a personalized recommendation algorithm, and rank and display the music materials and/or the prop materials in accordance with the recommendation degree, where the target information includes the music materials and/or the prop materials.

Alternatively, the third displaying module is specifically configured to: determine a recommendation degree of any one of the music materials and/or prop materials according to reference dimensions and a corresponding weight for each reference dimension; and determine the music materials and/or the prop materials whose recommendation degrees reach the threshold.

Alternatively, the information display apparatus further includes: a fourth displaying module configured to display second capturing controls at first associated positions of respective music materials and/or prop materials; and a fifth displaying module configured to in response to a triggering operation operated on any one of the second capturing controls, display the capturing page, the capturing page applying a music material and/or a prop material associated with the any one of second capturing controls.

Alternatively, the information display apparatus further includes: a hiding module configured to in response to a preset operation operated on the draft box page, hide the first capturing control, the target information, and the second capturing control.

Alternatively, the information display apparatus further includes: a sixth displaying module configured to in response to a triggering operation operated at a second associated position of any one of the music materials or the prop materials, display a music detail page corresponding to any one of the music materials or a prop detail page corresponding to any one of the prop materials.

Alternatively, the information display apparatus further includes: a seventh displaying module configured to before displaying the target information on the draft box page, display a preset placeholder on the draft box page until the target information is loaded completely.

In the information display apparatus provided by the present embodiment, upon a detection that the current page is the draft box page, the first capturing control is displayed on the draft box page, to enter the capturing page based on the first capturing control. Accordingly, a purpose of entering the capturing page directly from the draft box page through the first capturing control is achieved, a capturing path is shortened, facilitating a capturing efficiency of a user and the user experience.

The information display apparatus provided by the present embodiment may execute steps in the information display method provided by the method embodiments of the present disclosure, detailed execution steps and beneficial effects of which will not be repeated herein.

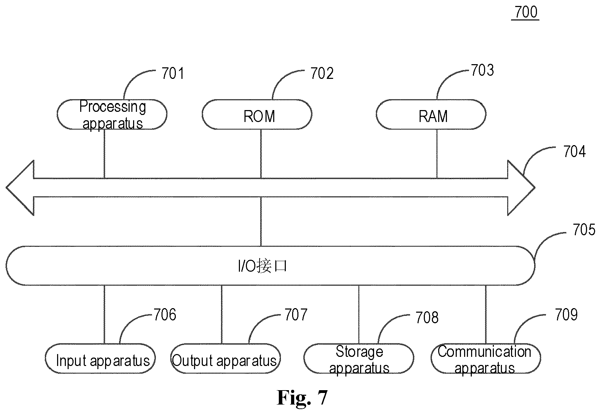

Fig. 7 is a schematic structural diagram of an electronic device in embodiments of the present disclosure. Reference is further made to Fig. 7, which illustrates a schematic structural diagram of an electronic device 700 suitable for implementing embodiments of the present disclosure. The electronic device 700 in embodiments of the present disclosure may include, but is not limited to, mobile terminals such as a mobile phone, a notebook computer, a digital broadcast receiver, a personal digital assistant (PDA), a pad, a portable multimedia player (PMP), an in-vehicle terminal (e.g., an on-board navigation terminal), and a wearable electronic device, and fixed terminals such as a digital television (TV), a desktop computer, and a smart home device. The electronic device shown in Fig. 7 is merely illustrative, and should not limit the functions and applicable scope in the embodiments of the present disclosure in any way.

As shown in Fig. 7, the electronic device 700 may include a processing apparatus 701 (e.g., a central processor or a graphic processor) that may execute various suitable actions and processing to implement the method of embodiments of the present disclosure according to a program stored in a read-only memory (ROM) 702 or loaded into a random access memory (RAM) 703 from a storage apparatus 708. The RAM 703 may also store various programs and data required for an operation of the electronic device 700. The processing apparatus 701, the ROM 702, and the RAM 703 are connected to one another through a bus 704. An input/output (I/O) interface 705 is also connected to the bus 704.

Typically, the I/O interface 705 may be connected to the following apparatuses: an input apparatus 706 including, such as, a touch screen, a touch pad, a keyboard, a mouse, a camera, a microphone, an accelerometer, or a gyroscope; an output apparatus 707 including, such as, a liquid crystal display (LCD), a speaker, or a vibrator; a storage apparatus 708 including, such as, a magnetic tape or a hard disk; and a communication apparatus 709. The communication apparatus 709 may allow wireless or wired communication between the electronic device 700 and other devices for data exchange. Although Fig. 7 shows the electronic device 700 having various apparatuses, it should be understood that not all the apparatuses shown are required to be implemented or configured. More or fewer apparatuses may be implemented or configured alternatively.

Particularly, the above processes described with reference to the flowcharts may be implemented as computer software programs according to the embodiments of the present disclosure. For example, embodiments of the present disclosure include a computer program product. The computer program product includes a computer program carried on a nontransitory computer-readable medium and encompassing program codes configured to execute the method shown in the flowchart, so as to implement the above method. In such an embodiment, the computer program may be downloaded and mounted via a network through the communication apparatus 709, or mounted via the storage apparatus 708, or mounted via the ROM 702. The computer program executes the above functions defined in the method of embodiments of the present disclosure when executed by the processing apparatus 701.

It should be noted that the above computer-readable medium of the present disclosure may be a computer-readable signal medium, a computer-readable storage medium, or any combination thereof. The computer-readable storage medium may include, but is not limited to, an electronic, magnetic, optical, electromagnetic, infrared, or semiconductor system, apparatus, or device, or any combination thereof. More specific instances of the computer-readable storage medium can include, but are not limited to, a portable computer magnetic disk, a hard disk, a random access memory (RAM), a read-only memory (ROM), an erasable programmable read-only memory (EPROM) or a flash memory, an optical fiber, a portable compact disk read-only memory (CD-ROM), an optical storage device, and a magnetic storage device that are each electrically connected through one or more wires, or any suitable combination thereof. In the present disclosure, the computer-readable storage medium may be any tangible medium that encompasses or stores a program. The program may be used by or in connection with an instruction execution system, apparatus, or device. In the present disclosure, however, the computer-readable signal medium may include a data signal propagating in a baseband or as part of a carrier wave, having computer-readable program codes carried thereon. Such a propagated data signal can take a variety of forms including, but not limited to, an electromagnetic signal, an optical signal, or any suitable combination thereof. The computer-readable signal medium can also be any computer-readable medium other than the computer-readable storage medium, which can send, propagate, or transmit a program to be used by or in connection with the instruction execution system, apparatus, or device. The program codes encompassed on the computer-readable medium can be transmitted via any suitable medium, including, but not limited to: a wire, an optic cable, a radio frequency (RF), etc., or any suitable combination thereof.

In some embodiments, clients and servers can communicate with each other via any currently known network protocol (such as a hypertext transfer protocol (HTTP)) or any network protocol to be developed in the future, and can be interconnected to any form or medium of digital data communication (for example, a communication network). Instances of the communication network include a local area network ("LAN"), a wide area network ("WAN"), the Internet, a peer-to-peer network (for example, an ad hoc peer-to-peer network), any currently known network, or any network to be developed in the future.

The above computer-readable medium may be encompassed in the above electronic device, or stand-alone without being assembled into the electronic device.

The above computer-readable medium carries one or more programs, when executed by the electronic device, the above one or more programs cause the electronic device to: check whether a current page is a draft box page; and in response to the current page being the draft box page, display a first capturing control on the draft box page, to enter a capturing page based on the first capturing control; where a video draft is displayed on the draft box page.

Alternatively, when the above one or more programs are executed by the electronic device, the electronic device may further execute other steps in the above embodiments.

The computer program codes configured to execute operations of the present disclosure can be written in one or more programming languages or combinations thereof. The above programming languages include, but are not limited to, object-oriented programming languages, such as Java, Smalltalk, and C++, and conventional procedural programming languages, such as "C" language. The program codes can be executed on a user's computer in all or in part, executed as an independent software package, executed on the user's computer in part and on a remote computer in part, or executed on the remote computer or a server in all. In the case involving the remote computer, the remote computer can be connected to the user's computer through any kind of network, including the local area network (LAN) or the wide area network (WAN), or can be connected to an external computer (for example, through the Internet on the basis of an Internet service provider).

The flowcharts and block diagrams in the accompanying drawings illustrate possibly implementable system architectures, functions, and operations of the systems, methods, and computer program products according to various embodiment of the present disclosure. In this regard, each block in the flowcharts or the block diagrams can represent a module, a program segment, or a code segment, which encompasses one or more executable instructions configured to implement specified logical functions. It should also be noted that in some alternative implementations, the functions noted in the blocks can also occur in an order other than those noted in the accompanying drawings. For example, two blocks represented in succession can in fact be executed substantially in parallel or in a reverse order sometimes, depending on the functions involved. It should also be noted that each block in the block diagrams and/or the flowcharts and combinations of blocks in the block diagrams and/or the flowcharts can be implemented through special-purpose hardware-based systems that execute the specified functions or operations, or can be implemented through combinations of special-purpose hardware and computer instructions.

Units described in embodiments of the present disclosure can be implemented through software or hardware. The name of the unit is not intended to define of the unit under certain circumstances.

The above functions herein can be executed, at least in part, by one or more hardware logic components. For example, non-restrictively, illustrative types of usable hardware logic components include: a field programmable gate array (FPGA), an application specific integrated circuit (ASIC), an application specific standard product (ASSP), a system on chip (SOC), a complex programmable logic device (CPLD), etc.

In the context of the present disclosure, a machine-readable medium can be a tangible medium that can encompass or store a program to be used by or in combination with the instruction execution system, apparatus, or device. The machine-readable medium can be a machine-readable signal medium or a machine-readable storage medium. The machine-readable medium can include, but is not limited to, an electronic, magnetic, optical, electromagnetic, infrared, or semiconductor system, apparatus, or device, or any suitable combination of the above. More specific instances of the machine-readable storage media would include a portable computer disk, a hard disk, a random access memory (RAM), a read-only memory (ROM), an erasable programmable read-only memory (EPROM) or a flash memory, an optical fiber, a portable compact disk read-only memory (CD-ROM), an optical storage device, a magnetic storage device that are each electrically connected through one or more wires, or any suitable combination thereof.

According to one or more embodiments of the present disclosure, the present disclosure provides an information display method. The method includes: checking whether a current page is a draft box page; and in response to the current page being the draft box page, displaying a first capturing control on the draft box page, to enter a capturing page based on the first capturing control; wherein a video draft is displayed on the draft box page.

According to one or more embodiments of the present the present disclosure, alternatively, the information display method provided by the present disclosure further includes: in response to a triggering operation operated on the first capturing control, switching from the draft box page to the capturing page.

According to one or more embodiments of the present disclosure, alternatively, the information display method provided by the present disclosure further includes: displaying set prompt information at a position associated with the first capturing control.

According to one or more embodiments of the present disclosure, alternatively, the information display method provided by the present disclosure further includes: in response to the video draft displayed on the draft box page satisfying a preset condition, determining target information based on preset logic and displaying the target information on the draft box page.

According to one or more embodiments of the present disclosure, in the information display method provided by the present disclosure, alternatively, the determining the target information based on preset logic and displaying the target information on the draft box page comprise: determining music materials and/or prop materials applied by the video draft, and ranking and displaying the music materials and/or the prop materials in accordance with a number of times applied by the video draft; or determining music materials and/or prop materials collected by a user, and ranking and displaying the music materials and/or the prop materials in accordance with time of collection by the user; or determining music materials and/or prop materials whose recommendation degrees reach a threshold based on a personalized recommendation algorithm, and ranking and displaying the music materials and/or the prop materials in accordance with the recommendation degree; wherein the target information comprises the music materials and/or the prop materials.

According to one or more embodiments of the present disclosure, in the information display method provided by the present disclosure, alternatively, the determining the music materials and/or prop materials whose recommendation degrees reach a threshold based on a personalized recommendation algorithm comprises: determining a recommendation degree of any one of the music materials and/or prop materials according to reference dimensions and a corresponding weight for each reference dimension; and determining the music materials and/or the prop materials whose recommendation degrees reach the threshold.

According to one or more embodiments of the present disclosure, alternatively, the information display method provided by the present disclosure further includes: displaying second capturing controls at first associated positions of respective music materials and/or prop materials; and in response to a triggering operation operated on any one of the second capturing controls, displaying the capturing page, the capturing page applying a music material and/or a prop material associated with the any one of second capturing controls

According to one or more embodiments of the present disclosure, alternatively, the information display method provided by the present disclosure further includes: in response to a preset operation operated on the draft box page, hiding the first capturing control, the target information, and the second capturing control.

According to one or more embodiments of the present disclosure, alternatively, the information display method provided by the present disclosure further includes: in response to a triggering operation operated at a second associated position of any one of the music materials or the prop materials, displaying a music detail page corresponding to any one of the music materials or a prop detail page corresponding to any one of the prop materials.

According to one or more embodiments of the present disclosure, alternatively, before displaying the target information on the draft box page, the information display method provided by the present disclosure further includes: displaying a preset placeholder on the draft box page until the target information is loaded.

According to one or more embodiments of the present disclosure, the present disclosure provides an information display apparatus. The apparatus includes: a checking module, configured to check whether a current page is a draft box page; and a first displaying module, configured to in response to the current page being the draft box page, display a first capturing control on the draft box page, to enter a capturing page based on the first capturing control; wherein a video draft is displayed on the draft box page.

According to one or more embodiments of the present disclosure, alternatively, the information display apparatus provided by the present disclosure further includes: a switching module configured to in response to a triggering operation operated on the first capturing control, switch from the draft box page to the capturing page..

According to one or more embodiments of the present disclosure, alternatively, the information display apparatus provided by the present disclosure further includes: a second displaying module configured to display set prompt information at a position associated with the first capturing control.

According to one or more embodiments of the present disclosure, alternatively, the information display apparatus provided by the present disclosure further includes: a third displaying module configured to in response to the video draft displayed on the draft box page satisfying a preset condition, determine target information based on preset logic and display the target information on the draft box page.

According to one or more embodiments of the present disclosure, in the information display apparatus provided by the present disclosure, alternatively, the third displaying module is specifically configured to determine music materials and/or prop materials applied by the video draft, and rank and display the music materials and/or the prop materials in accordance with a number of times applied by the video draft; or determine music materials and/or prop materials collected by a user, and rank and display the music materials and/or the prop materials in accordance with time of collection by the user; or determine music materials and/or prop materials whose recommendation degrees reach a threshold based on a personalized recommendation algorithm, and rank and display the music materials and/or the prop materials in accordance with the recommendation degree; wherein the target information comprises the music materials and/or the prop materials.

According to one or more embodiments of the present disclosure, in the information display apparatus provided by the present disclosure, alternatively, the third displaying module is specifically configured to determine a recommendation degree of any one of the music materials and/or prop materials according to reference dimensions and a corresponding weight for each reference dimension; and determine the music materials and/or the prop materials whose recommendation degrees reach the threshold.

According to one or more embodiments of the present disclosure, alternatively, the information display apparatus provided by the present disclosure further includes: a fourth displaying module configured to display second capturing controls at first associated positions of respective music materials and/or prop materials; and in response to a triggering operation operated on any one of the second capturing controls, display the capturing page, the capturing page applies a music material and/or a prop material associated with the any one of second capturing controls.

According to one or more embodiments of the present disclosure, alternatively, the information display apparatus provided by the present disclosure further includes: a hiding module configured to in response to a preset operation operated on the draft box page, hide the first capturing control, the target information, and the second capturing control.

According to one or more embodiments of the present disclosure, alternatively, the information display apparatus provided by the present disclosure further includes: a sixth displaying module configured to in response to a triggering operation operated at a second associated position of any one of the music materials or the prop materials, display a music detail page corresponding to any one of the music materials or a prop detail page corresponding to any one of the prop materials.

According to one or more embodiments of the present disclosure, alternatively, the information display apparatus provided by the present disclosure further includes: a seventh displaying module configured to display a preset placeholder on the draft box page until the target information is loaded completely, before the target information is displayed on the draft box page.

According to one or more embodiments of the present disclosure, the present disclosure provides an electronic device. The electronic device includes: one or more processors; and a storage configured to store one or more programs; the one or more programs, when executed by the one or more processors, cause the one or more processors to implement any one of the information display methods provided by the present disclosure.

According to one or more embodiments of the present disclosure, the present disclosure provides a computer-readable storage medium. The computer-readable storage medium stores a computer program thereon, where the computer program implements any one of the information display methods when executed by a processor.

A computer program product is further provided in embodiments of the present disclosure. The computer program product includes a computer program/instruction, where the computer program/instruction implements the above information display method when executed by a processor.

What are described above are merely the preferred embodiments of the present disclosure and the descriptions of the technical principles employed. It should be understood by those skilled in the art that the scope of disclosure involved in the present disclosure is not limited to the technical solutions formed by specific combinations of the above technical features, and should also cover other technical solutions formed by random combinations of the above technical features or equivalent features without departing from the concept disclosed above. For example, other technical solutions can be technical solutions formed through mutual replacement between the above features and technical features having similar functions disclosed in the present disclosure (but not limited thereto).

In addition, all the operations are depicted in a specific order, but should not be interpreted as requiring that these operations be executed in the specific order shown or in a successive order. In certain circumstances, multitasking and parallel processing may be advantageous. Similarly, several specific implementation details are encompassed in the above discussion, but should not be interpreted as limiting the scope of the present disclosure. Certain features that are described in the context of separate examples can also be implemented jointly in a single example. Likewise, various features that are described in the context of a single example can also be implemented in a plurality of examples separately or in any suitable sub-combination manner.

Although the subject has been described in language specific to structural features and/or logical method actions, it should be understood that the subject defined in the appended claims is not necessarily limited to the above specific features or actions. Rather, the above specific features and actions are merely illustrative forms for implementing the claims.

## Claims

1. An information display method, comprising:
checking whether a current page is a draft box page; and
in response to the current page being the draft box page, displaying a first capturing control on the draft box page, to enter a capturing page based on the first capturing control;
wherein a video draft is displayed on the draft box page.

2. The method according to claim 1, further comprising:
in response to a triggering operation operated on the first capturing control, switching from the draft box page to the capturing page.

3. The method according to claim 1, further comprising:
displaying set prompt information at a position associated with the first capturing control.

4. The method according to claim 1, further comprising:
in response to the video draft displayed on the draft box page satisfying a preset condition, determining target information based on preset logic and displaying the target information on the draft box page.

5. The method according to claim 4, wherein determining the target information based on preset logic and displaying the target information on the draft box page comprise:
determining music materials and/or prop materials applied by the video draft, and ranking and displaying the music materials and/or the prop materials in accordance with a number of times applied by the video draft; or
determining music materials and/or prop materials collected by a user, and ranking and displaying the music materials and/or the prop materials in accordance with time of collection by the user; or
determining music materials and/or prop materials whose recommendation degrees reach a threshold based on a personalized recommendation algorithm, and ranking and displaying the music materials and/or the prop materials in accordance with the recommendation degree;
wherein the target information comprises the music materials and/or the prop materials.

6. The method according to claim 5, wherein determining the music materials and/or prop materials whose recommendation degrees reach a threshold based on a personalized recommendation algorithm comprises:
determining a recommendation degree of any one of the music materials and/or prop materials according to reference dimensions and a corresponding weight for each reference dimension; and
determining the music materials and/or the prop materials whose recommendation degrees reach the threshold.

7. The method according to claim 5, further comprising:
displaying second capturing controls at first associated positions of respective music materials and/or prop materials; and
in response to a triggering operation operated on any one of the second capturing controls, displaying the capturing page, the capturing page applying a music material and/or a prop material associated with the any one of second capturing controls.

8. The method according to claim 7, further comprising:
in response to a preset operation operated on the draft box page, hiding the first capturing control, the target information, and the second capturing control.

9. The method according to claim 5, further comprising:
in response to a triggering operation operated at a second associated position of any one of the music materials or the prop materials, displaying a music detail page corresponding to any one of the music materials or a prop detail page corresponding to any one of the prop materials.

10. The method according to claim 4, wherein before displaying the target information on the draft box page, the method further comprises:
displaying a preset placeholder on the draft box page until the target information is loaded.

11. An information display apparatus, comprising:
a checking module, configured to check whether a current page is a draft box page; and
a first displaying module, configured to in response to the current page being the draft box page, display a first capturing control on the draft box page, to enter a capturing page based on the first capturing control;
wherein a video draft is displayed on the draft box page.

12. An electronic device, comprising:
one or more processors; and
a storage configured to store one or more programs;
the one or more programs, when executed by the one or more processors, cause the one or more processors to implement the method according to any one of claims 1-10.

13. A computer-readable storage medium, storing a computer program thereon, the computer program, when executed by a processor, implements the method according to any one of claims 1-10.
